# EUROPEAN PATENT SPECIFICATION

(11) **EP 2 939 960 B1**
(45) Date of publication and mention of the grant of the patent: **13.09.2017**
(21) Application number: 15165328.4
(22) Date of filing: 28.04.2015
(51) Int. Cl.: B65G 53/28

(54) **SUPPLYING SYSTEM**
ZUFÜHRSYSTEM
SYSTÈME D'ALIMENTATION

(30) Priority: 28.04.2014 IT MO20140114
(43) Date of publication of application: 04.11.2015
(73) Proprietor: Piovan S.P.A., 30036 Santa Maria di Sala (VE) (IT)
(72) Inventor: Bellio, Enrico, 31050 Ponzano V.to (Treviso) (IT); Battaglia, Andrea, 35013 Cittadella (Padova) (IT)
(74) Representative: Pandolfi, Paolo

(56) References cited:
- EP-A1- 2 196 782
- WO-A1-2011/007713
- DE-A1- 2 709 746
- DE-A1- 2 905 702
- FR-A- 1 338 507
- JP-A- 2000 015 662
- US-A1- 2002 068 104

## Description

The invention relates to a supplying system for supplying with plastic materials in granular and/or micro granular and/or powder and/or flake form or similar, user machines, in particular machines for treating and transforming plastic materials, such as machines for extruding, and subsequently injection and/or blow and/or compression moulding plastic materials.

Supplying systems are known that are operationally positioned above, and associated with, a respective using machine.

The known supplying systems include a dosing apparatus and a mixing apparatus. For example, the document WO 2011/007713 A1 discloses a supplying system according to the preamble of claim 1. The dosing apparatus, operationally positioned above the mixing apparatus, is configured for dispensing to the mixing apparatus a dosed mixture of plastic materials, this mixture containing, for example, plastic resins and/or plastic additives and/or mineral loads and/or dyes and/or fillers, according to the chemical and physical, mechanical, thermal, optical etc properties of a final product. The dosing apparatus is provided with a dosing opening through which the dosed mixture exits that, through the force of gravity, is dispensed to the mixing apparatus below.

The mixing apparatus is configured for mixing the dosed mixture so as to make the mixture homogeneous and suitable for the subsequent treatments and/or transformations carried out by the using machine. The mixing apparatus comprises an inlet opening, facing the aforesaid dosing opening, through which the mixing apparatus receives, from the dosing apparatus, the dosed mixture, and an exit opening through which a dosed and mixed mixture exits that through the force of gravity, is dispensed to the using machine below.

The latter comprises a supplying opening, or mouth, facing the exit opening of the mixing apparatus, through which the dosed and mixed mixture is introduced into the using machine for the subsequent treatments/transformations.

In known supplying systems it is thus provided that the dosing apparatus is positioned above the mixing apparatus and that the latter is positioned above the using machine, this resulting in the exit opening of the mixing apparatus being at a lower height than the height at which the dosing opening of the dosing apparatus is positioned.

In other words, in use, the dosing apparatus, the mixing apparatus and the using machine are positioned according to a vertical arrangement in which the dosing apparatus, the mixing apparatus and the using machine are arranged in succession from top to bottom.

This arrangement makes the operations of changing material and maintenance particularly difficult, dangerous and laborious that are required by the dosing apparatus. In fact, the height extent of the using machine makes it necessary for an operator entrusted with the aforesaid operations to work at a given height above the ground, this requiring the employer to, amongst other things, take suitable measures to ensure the safety of the operator.

An object of the present invention is to improve the known supplying systems, in particular the supplying systems for supplying using means with at least one incoherent plastic material, in particular in granular and/or flake form.

A further object is to provide a supplying system on which, with respect to known supplying systems, less difficult, dangerous and laborious operations can be performed. A still further object is to provide a supply system where dirt can be removed from the conveying conduits. These and still other objects are achieved by a supplying system according to one or more of the claims set out below.

The invention can be better understood and implemented with reference to the attached drawings that illustrate some embodiments thereof by way of non-limiting example, in which:
- Figures 1 to 8 are schematic views of a supplying system according to the invention in different configurations;
- Figure 9 is an enlarged view of a detail of Figure 1; and
- Figure 10 is an enlarged view of a detail of Figure 5.

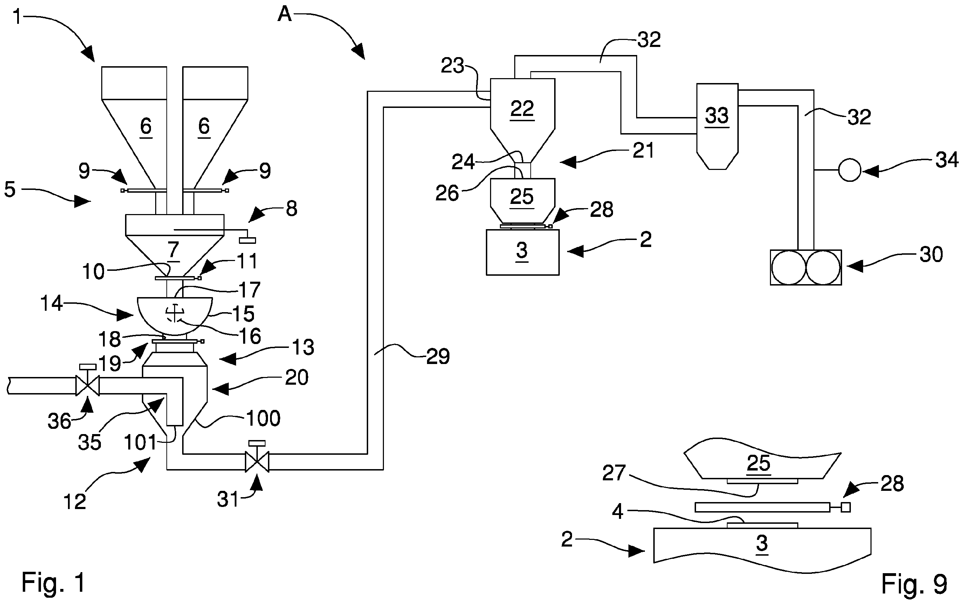

With reference to Figure 1 a first configuration A is shown of a supplying system 1 according to the invention arranged for supplying using means 2 with at least one incoherent plastic material, in particular in granular and/or microgranular and/or powder and/or flake form or similar.

In the first configuration A the using means 2 comprises a using machine 3, in particular a machine for treating and transforming plastic materials, such as a machine for extruding, and subsequently injection and/or blow and/or compression moulding plastic materials.

The using machine 3 comprises a supplying opening or mouth 4 (Figure 9) through which the plastic material is introduced into the using machine 3.

The supplying system 1 comprises a dosing apparatus 5 for dosing one or more plastic materials. The dosing apparatus 5 comprises one or more dosing hoppers 6, each arranged for containing a respective plastic material, for example a plastic resin and/or plastic additive and/or mineral load and/or dye and/or filler, and a dosing tank 7, connected to the dosing hopper/s 6 for receiving the plastic material to be dosed. In particular, the dosing tank 7 is provided with a weighing device 8 for controlling continuously and retroactively the quantity and/or the volume of plastic material exiting the dosing hopper/s 6 by measuring the weight variation of the latter during the exiting of the plastic material. The dosing apparatus 5 further comprises, for each dosing hopper 6, a respective first shutter 9, which is movable, for example, by a linear actuator that is not shown, between an open position, in which the first shutter 9 enables the plastic material to flow from a respective dosing hopper 6 to the dosing tank 7, and a closed position, in which the first shutter 9 prevents the plastic material flowing from a respective dosing hopper 6 to the dosing tank 7. The latter comprises a dosing opening 10 through which one dosed plastic material can exit the dosing tank 7. Also, the dosing apparatus 5 comprises a second shutter 11, which is movable, for example, by a linear actuator that is not shown, between an open position, in which the second shutter 11 opens the dosing opening 10 to enable the plastic material to exit the dosing tank 7, and a closed position, in which the second shutter 11 closes the dosing opening 10 to prevent the plastic material exiting the dosing tank 7.

The supplying system 1 further comprises a supplying apparatus 12 of pneumatic type for supplying with plastic material the using machine 3 through the supplying opening 4.

The supplying apparatus 12 comprises first containing means 13 for receiving the plastic material dosed by the dosing apparatus 5.

The first containing means 13 comprises a mixing apparatus 14 for mixing the dosed plastic material received from the dosing apparatus 5 so as to make the plastic material homogeneous and suitable for the subsequent treatments and/or transformations performed by the using machine 3.

The mixing apparatus 14 comprises a mixing tank 15, for receiving from the dosing apparatus 5, and containing, the plastic material, and a mixing element 16, housed in the mixing tank 15, for mixing the plastic material. In particular, the mixing tank 15 is provided with an inlet opening 17, facing the dosing opening 10, through which the mixing tank 15 receives, from the dosing apparatus 5, the dosed plastic material, and an exit opening 18 through which the dosed and mixed plastic material can exit. It should be noted that the second shutter 11 is interposed, and acts, between the dosing opening 10 and the inlet opening 17.

The mixing apparatus 14 further comprises a third shutter 19, which is movable, for example, by a linear actuator that is not shown, between an open position, in which the third shutter 19 opens the exit opening 18 to make the dosed and mixed plastic material exit from the mixing tank 15, to a closed position, in which the third shutter 19 closes exit opening 18 to prevent the dosed and mixed plastic material exiting the mixing tank 15.

The first containing means 13 further comprises a first container 20 for receiving the plastic material dosed by the dosing apparatus 5 and subsequently mixed by the mixing apparatus 14, between the latter and the first container 20 the third shutter 19 being interposed and acting to enable the mixed plastic material to flow from the mixing tank 15 to the first container 20/prevent the mixed plastic material from flowing from the mixing tank 15 to the first container 20.

The first container 20 comprises a choke 100, for example having the shape of an upturned cone, the function of which will be clear below.

The supplying apparatus 12 further comprises second containing means 21 for receiving the plastic material from the first containing means 13 and supplying the plastic material to the using means 2.

The second containing means 21 comprises a second container 22 for receiving from the first container 20 the mixed plastic material.

In particular, the second container 22 is provided with an inlet 23, through which the second container 22 receives the dosed and mixed plastic material, and an outlet 24 through which the dosed and mixed plastic material can exit.

At the outlet 24, the second container 22 comprises a shutter element, that is not shown, which is movable, as disclosed better below, between a closed position, in which the shutter closes the outlet 24 to enable the mixed plastic material to accumulate in the second container 22, and an open position, in which the shutter opens the outlet 24 to enable the mixed plastic material to exit the second container 22.

The second containing means 21 can further comprise, optionally, a buffer 25 arranged for containing a stockpile of mixed plastic material, the buffer 25 being interposed between the second container 22 and using machine 3 and configured for receiving the mixed plastic material from the second container 22 and dispensing the dosed plastic material to the using machine 3.

In particular, the buffer 25 is provided with an inlet port 26, facing the outlet 24 of the second container 22, through which it receives from the second container 22 the dosed and mixed plastic material, and an outlet port 27 facing the supplying opening 4 of the using machine 3, through which can exit the dosed and mixed plastic material for supplying the using machine 3.

Between the latter and the buffer 25 there can be a fourth shutter 28, which is movable, for example, by a linear actuator that is not shown, between an open position, in which the fourth shutter 28 opens the outlet port 27 to make the plastic material exit the buffer 25 towards the using machine 3, and a closed position, in which the fourth shutter 28 closes the outlet port 27 to prevent the plastic material exiting the buffer 25.

In the supplying system 1 according to the invention, the dosing opening 10 is positioned at a lower height than a height at which is positioned the outlet 24 of the second container 22, or if the buffer 25 is present, at a lower height than a height at which is positioned the respective outlet port 27.

More precisely, between the height of the dosing opening 10 and the height of the outlet 24, or if the buffer 25 is present, of the respective outlet port 27, there is a difference comprised between 1000 and 1500 mm, in particular substantially the same as 1200 mm.

Still more precisely, the height of the dosing opening 10 is comprised between 600 and 1200 mm, in particular, the height is substantially the same as 900 mm.

The supplying apparatus 12 further comprises a conduit 29 for pneumatically connecting the first containing means 13 to the second containing means 21, in particular for pneumatically connecting the first container 20 to the second container 22.

Also, the supplying apparatus 12 comprises a vacuum pump 30 configured for making a vacuum inside the conduit 29 so as to convey the dosed and mixed plastic material from the first container 20 to the second container 22.

The supplying apparatus 12 further includes, optionally, a valve 31, positioned along the conduit 29 between the first container 20 and the second container 22, arranged to adjust a flow of dosed and mixed plastic material between the first container 20 and the second container 22.

Also, the supplying apparatus 12 comprises a further conduit 32 for pneumatically connecting the vacuum pump 30 to the second container 22.

The supplying apparatus 12 is further provided with filter means 33, positioned along the further conduit 32 between the second container 22 and the vacuum pump 30, for filtering the air entering the vacuum pump 30.

Also, between the filter means 33 and the vacuum pump 30, along the further conduit 32, sensor means 34 is provided that is arranged for detecting the air pressure inside the further conduit 32.

The supplying apparatus 12 further comprises injecting means 35 for injecting air into the first container 20 to promote the complete evacuation of the plastic material contained therein. The injecting means 35 comprises an outlet 101 from which air exits, the outlet 101 being positioned inside the first container 20 at the choke 100. Also, the injecting means 35 is connected to an external air source, which is not shown, for example a source of dehumidified air, the flow of air being adjusted by a further valve 36.

Below, the operation of the supplying system 1 according to the invention in the first configuration A is disclosed.

In a first step, depending on a recipe set in the dosing apparatus 5, the first shutters 9 are driven to discharge through the force of gravity, from the dosing hopper/s 6 into the dosing tank 7, the desired quantities of plastic material intended for forming the required mixture.

In a second step, the first shutters 9 are closed and the second shutter 11 is driven that discharges the dosed mixture in the mixing tank 15, where it is mixed and homogenised by the mixing element 16.

In a third step, after mixing has finished, the second shutter 11 is closed and the third shutter 19 is driven to discharge through the force of gravity, from the mixing tank 15 into the first container 20, the dosed and mixed mixture.

In a fourth step, with the valve 31 and the further valve 36 closed, the vacuum pump 30 starts up. When a certain vacuum value has been reached, which is read by the sensor means 34, the valve 31 and the further valve 36 open and the material flows from the first container 20 to the second container 22. In the latter, the shutter is kept closed by the vacuum created by the vacuum pump 30 in the second container 22. Alternatively, the shutter could be driven by an actuator. The fourth step is activated, if the buffer 25 is present, by a level sensor housed therein intended to detect a level of material contained in the buffer 25.

In a fifth step, after conveying all the dosed and mixed mixture in the second container 22, the vacuum pump 30 is deactivated. This causes the shutter to be opened that is contained in the second container 22 and the falls, through the force of gravity, of the dosed and mixed mixture from the second container 22 to, if present, the buffer 25, or to the using machine 3. It should be noted that the vacuum pump 30 and the injecting means 35 are maintained active for a certain time after all the mixture has reached the second container 22 so as to clean possible material residues off the conduit 29. More precisely, the vacuum pump 30 generates a vacuum in the first container 20, this vacuum nevertheless having to provide fluidification to permit correct conveying of the incoherent plastic material and thus complete cleaning of the conduit 29 (the vacuum alone generated by the vacuum pump 30 is not sufficient for conveying the incoherent plastic material, a "vehicle" is necessary that enables the incoherent plastic material to be conveyed). For this reason, the presence is important of the injecting means 35 that delivers a flow of air, known as of "fluidification", into the first container 20 that enables conveying of the incoherent plastic material to be fluidified. In this context, "fluidifying conveying of the incoherent plastic material" is defined as varying the ratio between the flow of air (measured in m³/h) delivered by the injecting means 35 to the first container 20 and the quantity of incoherent plastic material conveyed (measured in kg/h) in order to make possible the movement of the plastic material along the conduit 29. It is extremely important to adjust appropriately the flow of air dispensed by the injecting means 35, this adjustment being made, as mentioned previously, by the further valve 36. In fact, if the ratio between the flow of air and the quantity of conveyed material is increased too much, there is a greater speed of the incoherent plastic material and a greater quantity of conveyed material. This could nevertheless cause, in the case of stiff materials or materials loaded with glass fibre, greater abrasion in the conduits (in particular near the curves) or, in the case of soft materials, could generate the so-called "angel hairs" i.e. filaments that originate in the conduits because of the excessive speed that cause a strong contact of the conveyed material with the walls of the conduits. Vice versa, if the ratio between the flow of air and the quantity of conveyed material is reduced too much there is a lower speed of the plastic material and a smaller quantity of conveyed material. This could nevertheless generate plugs of material, i.e. accumulation of material in the conduits. In fact, at low speed the material tends to slide and get deposited on the walls of the conduits inasmuch as the force of gravity is greater than the supporting force generated by the flow of air on the plastic material.

The delivery of the flow of air by the injecting means 35 into the first container 20 is promoted by the Venturi effect that originates at the choke 100 of the first container 20, where the outlet 101 of the injecting means 35 is positioned. In fact, the section reduction at the choke 100 produces, through the "Venturi effect", a speed increase and a reduction of the pressure, of the air sucked upstream of the first container 20 at the outlet 101 of the injecting means 35, this pressure reduction promoting the exiting of the air from the injecting means 35 and the delivery of the air into the first container 20.

Also, it should be noted that, after the dosed and mixed mixture is received into the first container 20 and the third shutter 19 has been closed, whilst steps four and five are performed, a first step and a second step can restart to make another mixture.

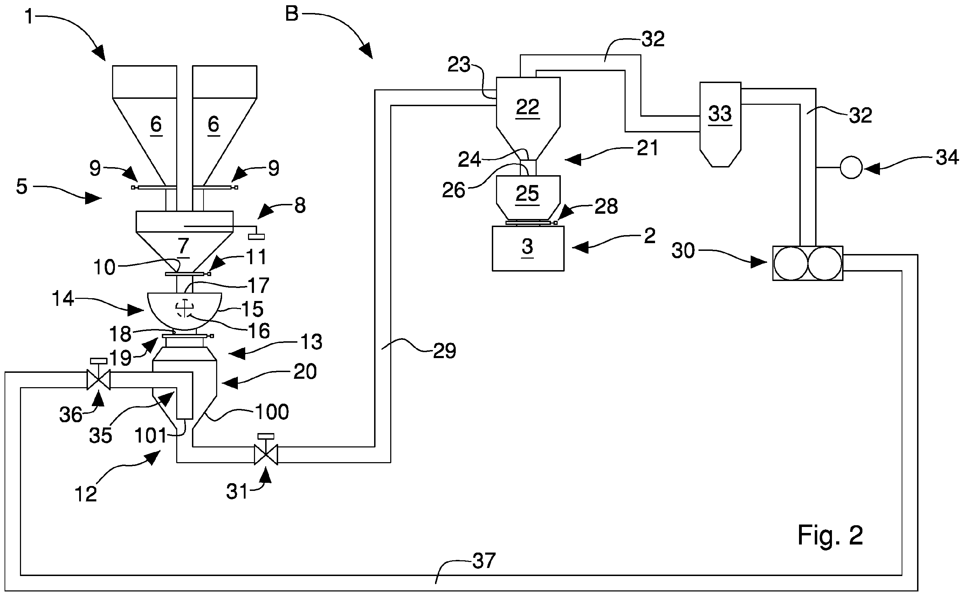

With reference to Figure 2, a second configuration B is shown of a supplying system 1 according to the invention arranged for supplying using means 2 with at least one incoherent plastic material, in particular in granular and/or microgranular and/or powder and/or flake form or similar.

Also in the second configuration B the using means 2 comprises a using machine 3, in particular a machine for treating and transforming plastic materials, such as a machine for extruding, and subsequently injection and/or blow and/or compression moulding plastic materials.

The supplying system 1 shown in Figure 2 differs from the supplying system 1 shown in Figure 1 through the fact that the injecting means 35 is connected, via another conduit 37, to an outlet of the vacuum pump 30 so as to make a closed circuit.

In this configuration, the injecting means 35 delivers into the first container 20 (as disclosed previously) the air that is already present in the closed circuit. It should be noted that if the injecting means 35 were not already present in the closed circuit, there would be the risk of the vacuum generated by the vacuum pump 30 spreading to the weighing device 8 and compromising the precision thereof.

The operation of the supplying system 1 shown in Figure 2 is similar to the operation of the supplying system 1 shown in Figure 1 and for the sake of brevity is not repeated.

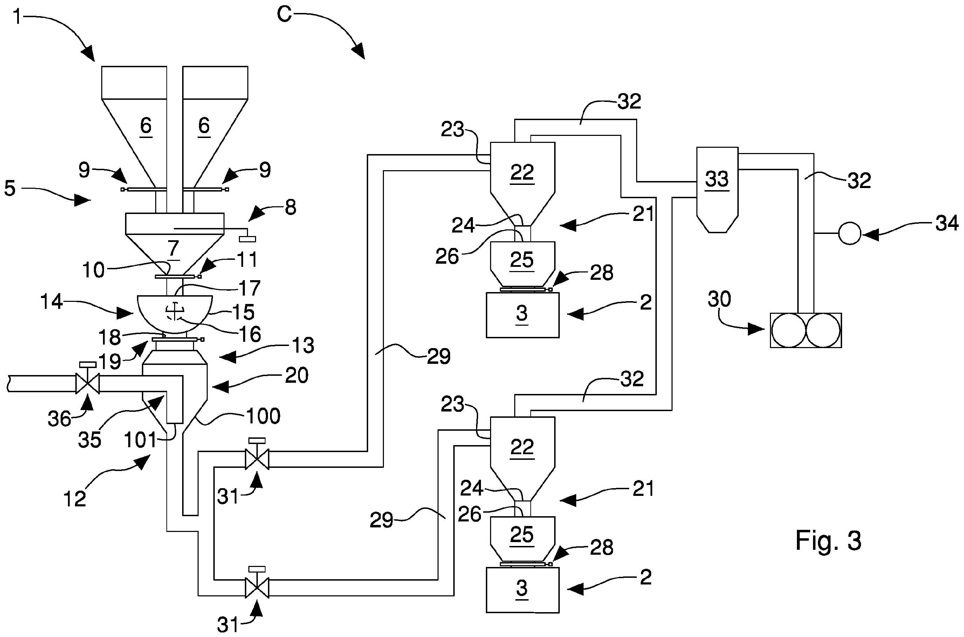

With reference to Figure 3, a third configuration C is shown of a supplying system 1 according to the invention arranged for supplying using means 2 with at least one incoherent plastic material, in particular in granular and/or microgranular and/or powder and/or flake form or similar.

In the third configuration C the using means 2 comprises a plurality of using machines 3, in particular machines for treating and transforming plastic materials, such as machines for extruding, and subsequently injection and/or blow and/or compression moulding plastic materials. Each using machine 3 comprises a supplying opening 4 through which the plastic material is introduced into the respective using machine 3.

Also, in the third configuration C, the second containing means 21 comprises a plurality of second containers 22 for each receiving from the first container 20 the mixed plastic material.

In particular, each second container 22 is provided with an inlet 23, through which it receives the dosed and mixed plastic material, and with an outlet 24 through which can exit the dosed and mixed plastic material.

At the outlet 24, each second container 22 comprises a shutter element, that is not shown, which is movable, as disclosed previously, between a closed position, in which the shutter closes the outlet 24 to enable the mixed plastic material to accumulate in the second container 22, and an open position, in which the shutter opens the outlet 24 to enable the mixed plastic material to exit the second container 22.

In the third configuration C, the second containing means 21 can further comprise, optionally, a plurality of buffers 25 each arranged for containing a respective stockpile of mixed plastic material, each buffer 25 being interposed between a respective second container 22 and a respective using machine 3 and being configured for receiving the mixed plastic material from the respective second container 22 and dispensing the dosed plastic material to the respective using machine 3.

In particular, each buffer 25 is provided with an inlet port 26, facing the outlet 24 of the respective second container 22, through which the buffer 25 receives from the respective second container 22 the dosed and mixed plastic material, and a respective outlet port 27 facing the supplying opening 4 of the respective using machine 3, through which can exit the dosed and mixed plastic material for supplying the respective using machine 3.

Between each using machine 3 and the respective buffer 25 there can be a fourth shutter 28, which is movable, for example, by a linear actuator that is not shown, between an open position, in which the fourth shutter 28 opens the outlet port 27 to make the plastic material exit the buffer 25 to the respective using machine 3, to a closed position, in which the fourth shutter 28 closes the outlet port 27 to prevent the plastic material exiting the buffer 25.

In the supplying system 1 in the third configuration C, the dosing opening 10 is positioned at a lower height than a height at which the outlets 24 of the second containers 22 are positioned, or if the buffers 25 are present, than a height at which the respective outlet ports 27 are positioned.

More precisely, between the height of the dosing opening 10 and the height of the outlets 24, or if the buffers 25 are present, of the respective outlet ports 27, there is a difference comprised between 1000 and 1500 mm, in particular substantially the same as 1200 mm.

Also more precisely, the height of the dosing opening 10 is comprised between 600 and 1200 mm, in particular, the height is substantially the same as 900 mm.

In the third configuration C, the supplying apparatus 12 further comprises a plurality of conduits 29 each arranged for pneumatically connecting the first container 20 to one of the second containers 22.

Also, in the third configuration C, the supplying apparatus 12 include a plurality of valves 31, each positioned along a respective conduit 29 between the first container 20 and a respective second container 22, each arranged to adjust a flow of dosed and mixed plastic material between the first container 20 and the respective second container 22.

Further, in the third configuration C, the supplying apparatus 12 comprises a plurality of further conduits 32 for pneumatically connecting the vacuum pump 30 to a respective second container 22.

The operation of the supplying system 1 in the third configuration C differs from the operation disclosed with reference to the first configuration A only because of the fact that the recipe can be changed each time, depending on the using machine 3 to be supplied.

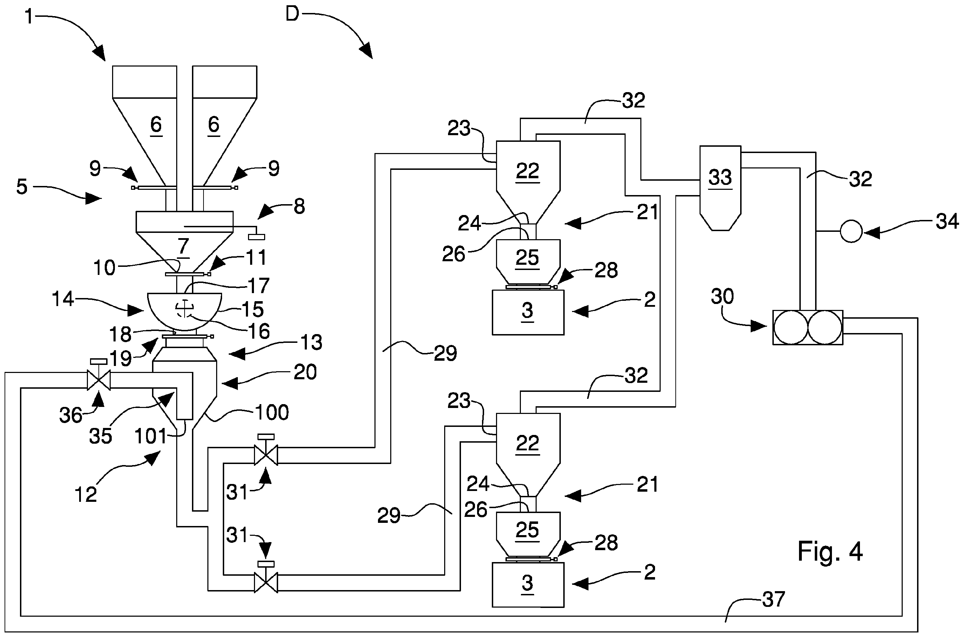

With reference to Figure 4 a fourth configuration D is shown of a supplying system 1 according to the invention arranged for supplying using means 2 with at least one incoherent plastic material, in particular in granular and/or microgranular and/or powder and/or flake form or similar.

The supplying system 1 shown in Figure 4 differs from the supplying system 1 shown in Figure 3 through the fact that the injecting means 35 is connected, via another conduit 37, to an outlet of the vacuum pump 30 so as to make a closed circuit.

The operation of the supplying system 1 shown in Figure 4 is similar to the operation of the supplying system 1 shown in Figure 3.

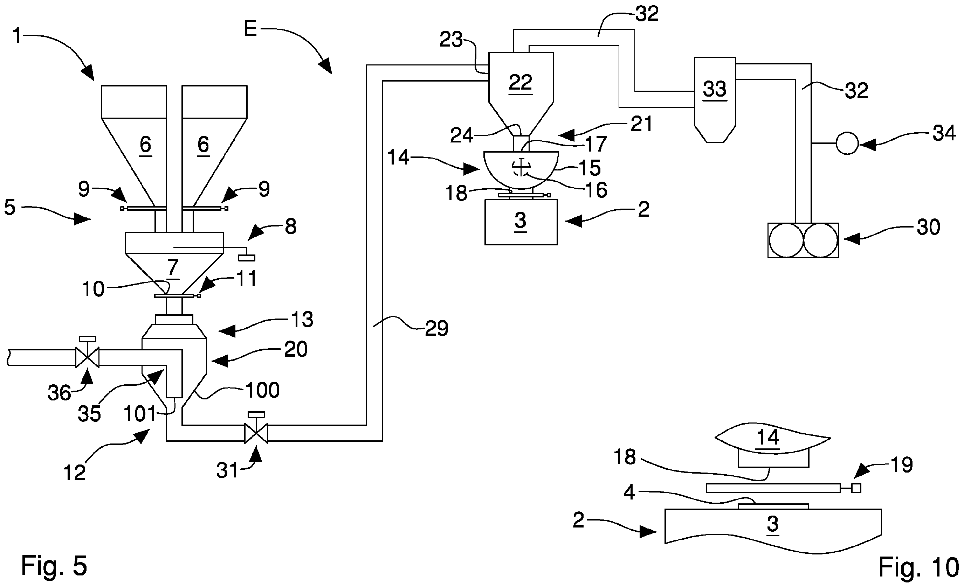

With reference to Figure 5, a fifth configuration E is shown of a supplying system 1 according to the invention arranged for supplying using means 2 with at least one incoherent plastic material, in particular in granular and/or microgranular and/or powder and/or flake form or similar.

In the fifth configuration E the using means 2 comprises a using machine 3, in particular a machine for treating and transforming plastic materials, such as a machine for extruding, and subsequently injection and/or blow and/or compression moulding plastic materials.

The using machine 3 comprises a supplying opening 4 through which the plastic material is introduced into the using machine 3.

The supplying system 1 comprises a dosing apparatus 5 for dosing one or more plastic materials. The dosing apparatus 5 comprises one or more dosing hoppers 6, each arranged for containing a respective plastic material, for example a plastic resin and/or plastic additive and/or mineral load and/or dye and/or filler, and a dosing tank 7, connected to the dosing hopper/s 6 for receiving the plastic material to be dosed. In particular, the dosing tank 7 is provided with a weighing device 8 for controlling continuously and retroactively the quantity and/or the volume of plastic material exiting the dosing hopper/s 6 by measuring the weight variation of the latter during the exiting of the plastic material. The dosing apparatus 5 further comprises, for each dosing hopper 6, a respective first shutter 9, which is movable, for example, by a linear actuator that is not shown, between an open position, in which the first shutter 9 enables the plastic material to flow from a respective dosing hopper 6 to the dosing tank 7, and a closed position, in which the first shutter 9 prevents the plastic material flowing from a respective dosing hopper 6 to the dosing tank 7. The latter comprises a dosing opening 10 through which one dosed plastic material can exit the dosing tank 7. Also, the dosing apparatus 5 comprises a second shutter 11, which is movable, for example, by a linear actuator that is not shown, between an open position, in which the second shutter 11 opens the dosing opening 10 to enable the plastic material to exit the dosing tank 7, and a closed position, in which the second shutter 11 closes the dosing opening 10 to prevent the plastic material exiting the dosing tank 7.

The supplying system 1 further comprises a supplying apparatus 12 of pneumatic type for supplying with plastic material the using machine 3 through the supplying opening 4.

The supplying apparatus 12 comprises first containing means 13 for receiving the plastic material dosed by the dosing apparatus 5.

In the fifth configuration E, the first containing means 13 comprises a first container 20 for receiving the plastic material dosed by the dosing apparatus 5, between the latter and the first container 20 the second shutter 11 being interposed and acting to enable the mixed plastic material to flow from/prevent the mixed plastic material from flowing from the dosing tank 7 to the first container 20.

The first container 20 comprises a choke 100, for example having the shape of an upturned cone.

The supplying apparatus 12 further comprises second containing means 21 for receiving the plastic material from the first containing means 13 and supplying it to the using means 2.

The second containing means 21 comprises a second container 22 for receiving from the first container 20 the mixed plastic material.

In particular, the second container 22 is provided with an inlet 23, through which it receives the dosed plastic material, and an outlet 24 through which the dosed plastic material can exit.

At the outlet 24, the second container 22 comprises a shutter element, that is not shown, which is movable, as disclosed better below, between a closed position, in which the shutter closes the outlet 24 to enable the mixed plastic material to accumulate in the second container 22, and an open position, in which the shutter opens the outlet 24 to enable the mixed plastic material to exit the second container 22.

The second containing means 21, in the fifth configuration E, further comprises a mixing apparatus 14 for mixing the dosed plastic material received from the second container 22 so as to make the plastic material homogeneous and suitable for the subsequent treatments and/or transformations performed by the using machine 3.

The mixing apparatus 14 is interposed between the second container 22 and the using machine 3 and is configured for dispensing the dosed and mixed plastic material to the latter.

Also, the mixing apparatus 14 comprises a mixing tank 15, for receiving from the second container 22, and containing, the plastic material, and a mixing element 16, housed in the mixing tank 15, for mixing the plastic material. In particular, the mixing tank 15 is provided with an inlet opening 17, facing the outlet 24, through which the mixing tank 15 receives, from the second container 22, the dosed plastic material, and an exit opening 18, facing the supplying opening 4 of the using machine 3, through which can exit the dosed and mixed plastic material for supplying the using machine 3.

The mixing apparatus 14 further comprises a third shutter 19, which is movable, for example, by a linear actuator that is not shown, between an open position, in which the third shutter 19 opens the exit opening 18 to make the plastic material exit the mixing tank 15, to a closed position, in which the third shutter 19 closes the exit opening 18 to prevent the plastic material exiting the mixing tank 15.

In the fifth configuration E, in the supplying system 1 according to the invention, the dosing opening 10 is positioned at a lower height than a height at which the exit opening 18 of the mixing apparatus 14 is positioned.

More precisely, between the height of the dosing opening 10 and the height of the exit opening 18, there is a difference comprised between 1000 and 1500 mm, in particular substantially the same as 1200 mm.

Also more precisely, the height of the dosing opening 10 is comprised between 600 and 1200 mm, in particular, the height is substantially the same as 900 mm.

Also in the fifth configuration E, the supplying apparatus 12 comprises a conduit 29 for pneumatically connecting the first containing means 13 to the second containing means 21, in particular for pneumatically connecting the first container 20 al second container 22.

Again, the supplying apparatus 12, also in the fifth configuration E, comprises a vacuum pump 30 configured for making a vacuum inside the conduit 29 so as to convey the dosed and mixed plastic material from the first container 20 to the second container 22.

The supplying apparatus 12 further includes a valve 31, positioned along the conduit 29 between the first container 20 and the second container 22, arranged to adjust a flow of dosed and mixed plastic material between the first container 20 and the second container 22.

Also, the supplying apparatus 12 comprises a further conduit 32 for pneumatically connecting the vacuum pump 30 to the second container 22.

The supplying apparatus 12 is further provided with filter means 33, positioned along the further conduit 32 between the second container 22 and the vacuum pump 30, for filtering the air entering the vacuum pump 30.

Also, between the filter means 33 and the vacuum pump 30, along the further conduit 32, sensor means 34 is provided that is arranged for detecting the air pressure inside the further conduit 32.

The supplying apparatus 12 further comprises injecting means 35 for injecting air into the first container 20 to promote the complete evacuation of the plastic material contained therein. The injecting means 35 comprises an outlet 101 from which air exits, the outlet 101 being positioned inside the first container 20 at the choke 100. Also, the injecting means 35 is connected to an external air source, which is not shown, for example a source of dehumidified air, the flow of air being adjusted by a further valve 36.

The operations of the supplying system 1 according to the invention in the fifth configuration E is disclosed below.

In a first step, depending on a recipe set in the dosing apparatus 5, the first shutters 9 are driven to discharge through gravity from the dosing hopper/s 6 to the dosing tank 7, the desired quantities of plastic material intended for forming the required mixture.

In a second step, the first shutters 9 are closed and the second shutter 11 is driven that unloads the dosed mixture through the force of gravity into the first container 20.

In a third step, with the valve 31 and the further valve 36 closed, the vacuum pump 30 starts. When a certain vacuum value has been reached, which is read by the sensor means 34, the valve 31 and the further valve 36 open and the material flows from the first container 20 to the second container 22. In the latter, the shutter is kept closed by the vacuum created by the vacuum pump 30 in the second container 22. Alternatively, the shutter could be driven by an actuator. The third step is activated by a level sensor housed in the mixing tank 15 intended for detecting a level of material contained in the latter.

In a fourth step, after conveying all the dosed mixture to the second container 22, the vacuum pump 30 is deactivated. This causes the shutter contained in the second container 22 to open and the dosed mixture to fall through the force of gravity from the second container 22 to the mixing apparatus 14. It should be noted that the vacuum pump 30 and the injecting means 35 are maintained active for a certain time after the entire mixture has reached the mixing apparatus 14 so as to clean possible material residues off the conduit 29.

The operation of the injecting means 35 in the fifth configuration E of the supplying system 1 is similar to that disclosed with reference to the first configuration A and is not repeated for the sake of brevity.

In a fifth step, the mixing apparatus 14 mixes and homogenises, with the mixing element 16, the dosed material.

In a sixth step, the third shutter 19 is driven to discharge through the force of gravity, from mixing tank 15 into the using machine 3, the dosed and mixed mixture.

It should be noted that, after the dosed mixture is received into the first container 20 and the second shutter 11 has been closed, whilst steps three to six are run, a first step can restart to make another mixture.

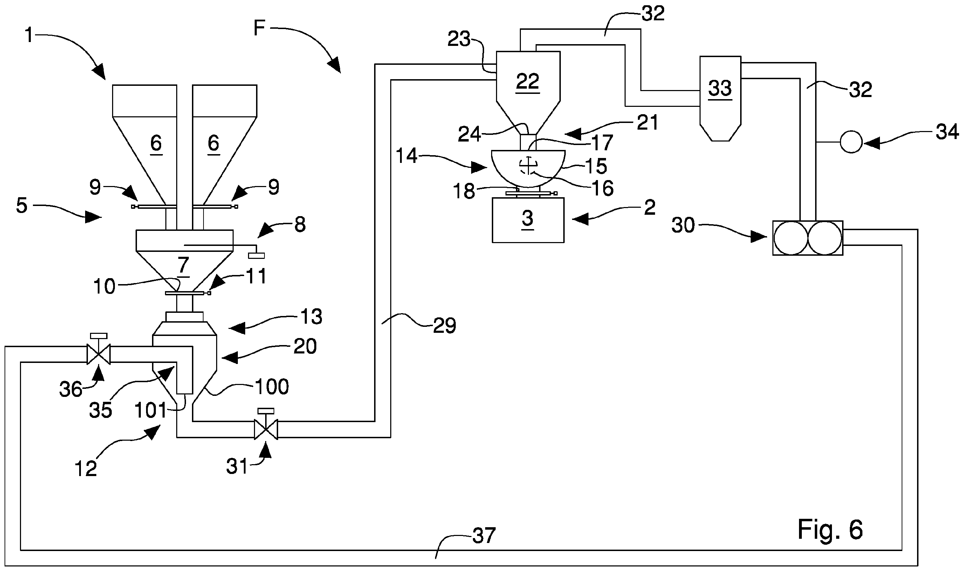

With reference to Figure 6 a sixth configuration F is shown of a supplying system 1 according to the invention arranged for supplying using means 2 with at least one incoherent plastic material, in particular in granular and/or microgranular and/or powder and/or flake form or similar.

Also in the sixth configuration F the using means 2 comprises a using machine 3, in particular a machine for treating and transforming plastic materials, such as a machine for extruding, and subsequently injection and/or blow and/or compression moulding plastic materials.

The supplying system 1 shown in Figure 6 differs from the supplying system 1 shown in Figure 5 through the fact that the injecting means 35 is connected, via another conduit 37, to an outlet of the vacuum pump 30 so as to make a closed circuit.

The operation of the supplying system 1 shown in Figure 6 is similar to the operation of the supplying system 1 shown in Figure 5 and for the sake of brevity is not repeated.

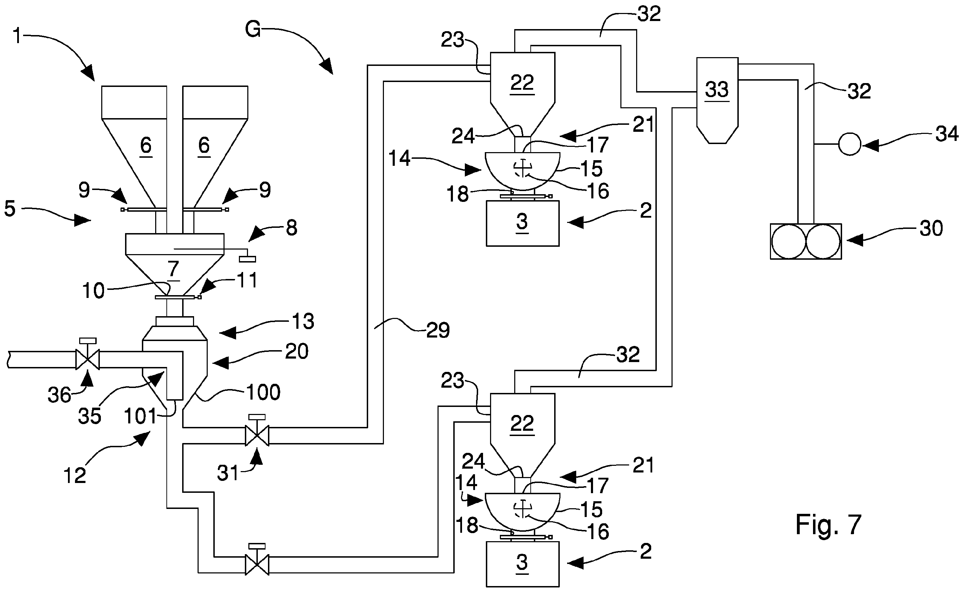

With reference to Figure 7 a seventh configuration G is shown of a supplying system 1 according to the invention arranged for supplying using means 2 with at least one incoherent plastic material, in particular in granular and/or microgranular and/or powder and/or flake form or similar.

In the seventh configuration G the using means 2 comprises a plurality of using machines 3, in particular machines for treating and transforming plastic materials, such as machines for extruding, and subsequently injection and/or blow and/or compression moulding plastic materials. Each using machine 3 comprises a supplying opening 4 through which the plastic material is introduced into the respective using machine 3.

Also, in the seventh configuration G, the second containing means 21 comprises a plurality of second containers 22 for each receiving from the first container 20 the mixed plastic material.

In particular, each second container 22 is provided with an inlet 23, through which it receives the dosed plastic material, and with an outlet 24 through which the dosed plastic material can exit.

At the outlet 24, each second container 22 comprises a shutter element, that is not shown, which is movable, as disclosed previously, between a closed position, in which the shutter closes the outlet 24 to enable the mixed plastic material to accumulate in the second container 22, and an open position, in which the shutter opens the outlet 24 to enable the mixed plastic material to exit the second container 22.

In the seventh configuration G, the second containing means 21 comprises a plurality of mixing apparatuses 14 each arranged for mixing il mixed plastic material, each mixing apparatus 14 being interposed between a respective second container 22 and a respective using machine 3 and being configured for receiving the dosed plastic material from the respective second container 22 and dispensing the dosed plastic material to the respective using machine 3.

In particular, each mixing apparatus 14 is provided with an inlet opening 17, facing the outlet 24 of the respective second container 22, through which it receives from the respective second container 22 the dosed plastic material, and a respective exit opening 18 facing the supplying opening 4 of the respective using machine 3, through which the dosed and mixed plastic material can exit to supply the respective using machine 3.

Between each using machine 3 and the respective mixing apparatus 14 a third shutter 19 is present, which is movable, for example, by a linear actuator that is not shown, between an open position, in which the third shutter 19 opens the exit opening 18 to make the plastic material exit the mixing apparatus 14 towards the respective using machine 3, to a closed position, in which the third shutter 19 closes the exit opening 18 to prevent the plastic material exiting the mixing apparatus 14.

In the supplying system 1 in the seventh configuration G, the dosing opening 10 is positioned at a lower height than a height at which the outlet openings 18 are positioned.

More precisely, between the height of the dosing opening 10 and the height of the outlet openings 18, there is a difference comprised between 1000 and 1500 mm, in particular substantially the same as 1200 mm.

Also more precisely, the height of the dosing opening 10 is comprised between 600 and 1200 mm, in particular, the height is substantially the same as 900 mm.

In the seventh configuration G the supplying apparatus 12 further comprises a plurality of conduits 29 each arranged for pneumatically connecting the first container 20 to one of the second containers 22.

Also, in the seventh configuration G, the supplying apparatus 12 include a plurality of valves 31, each positioned along a respective conduit 29 between the first container 20 and a respective second container 22, each arranged to adjust a flow of dosed and mixed plastic material between the first container 20 and the respective second container 22.

Further, in the seventh configuration G, the supplying apparatus 12 comprises a plurality of further conduits 32 for pneumatically connecting the vacuum pump 30 to a respective second container 22.

The operation of the supplying system 1 in the seventh configuration G differs from the operation disclosed in relation to the fifth configuration E only because of the fact that the recipe can be changed each time, depending on the using machine 3 to be supplied.

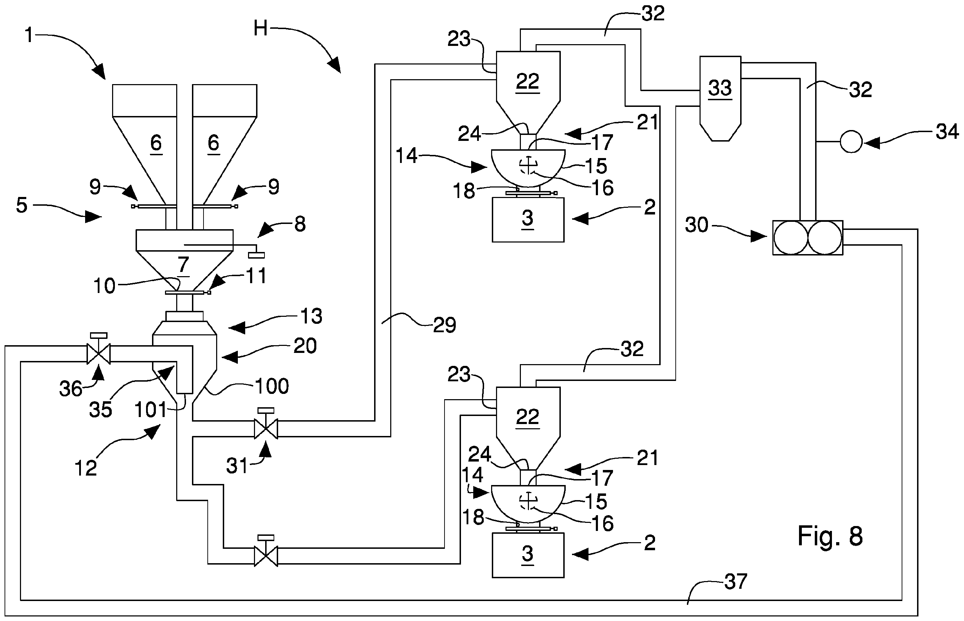

With reference to Figure 8, an eighth configuration H is shown of a supplying system 1 according to the invention arranged for supplying using means 2 with at least one incoherent plastic material, in particular in granular and/or microgranular and/or powder and/or flake form or similar.

The supplying system 1 shown in Figure 8 differs from the supplying system 1 shown in Figure 7 through the fact that the injecting means 35 is connected, via another conduit 37, to an outlet of the vacuum pump 30 so as to make a closed circuit.

The operation of the supplying system 1 shown in Figure 8 is similar to the operation of the supplying system 1 shown in Figure 7.

The operation of the supplying system 1 in the aforesaid configurations A-H is managed and controlled by a management and control system, that is not shown, included in the supplying system 1 and comprising suitable management and control software.

It should be noted how the supplying system 1 according to the invention enables, with respect to known supplying systems, routine and extraordinary maintenance tasks to be performed on the dosing apparatus 5 in a less difficult, dangerous and laborious manner.

In fact, in the supplying system 1 disclosed above, the dosing opening 10 of the dosing apparatus 5 is positioned at a lower height than the height at which the dosing openings of known dosing apparatuses are positioned, this position being independent of the vertical extent of the user machine/s, this making it easier to perform tasks on the dosing apparatus 5.

The dosing apparatus 5 can even be positioned on the ground, i.e. be rested on a base on which also the user machine/s is/are rested, this further facilitating maintenance thereof.

Also, it should be noted how in all the configurations A-H, the supplying system 1 comprises a single centralised dosing apparatus 5 configured for serving one or more user machines 3.

This enables the initial investment for making the supplying system 1 to be reduced, routine and extraordinary maintenance costs to be reduced, energy consumption to be optimised, the linear extent of the supplying apparatus to be reduced, the time for changing colour and/or cleaning and/or transport to be reduced and the flexibility of the supplying system 1 to be increased.

It should be further noted how in configurations E-H the particular position of the mixing apparatus/es 14 eliminates the problem of possible de-mixing and/or separation of the mixture that may occur during conveying thereof. In fact, in these configurations the mixture is made directly above the user machine/s 3. Also, this position enables the quantity of material to be conveyed to be reduced in the case of critical or pre-humidified materials.

Also, it should be noted how the first container 20 and the second container/s 22 have a volume that enables them to define respective buffer volumes for the plastic material, this increasing the flexibility of the supplying system 1.

Also, it should be noted how the supplying system 1 according to the invention enables, through a suitable control and management, performed by the control and management system, of the vacuum pump 30 and/or of the injecting means 35 and/or of the valve 31 and/or of the further valve 36, complete cleaning of the conduit 29, this avoiding phenomena of pollution between the successive mixtures made.

## Claims

1. Supplying system (1) for supplying using means (2) with at least one incoherent plastic material, in particular in granular and/or flake form, said using means (2) being provided with supplying opening means (4) through which said at least one plastic material is introduced into said using means (2), said system (1) comprises:
- a dosing apparatus (5) for dosing said at least one plastic material, said dosing apparatus (5) being provided with a dosing opening (10) through which at least one dosed plastic material exits, and
- a supplying apparatus (12) for supplying with said at least one dosed plastic material said using means (2) through said supplying opening means (4);
wherein said supplying apparatus (12) is a pneumatic supplying apparatus comprising first containing means (13) including a first container (20) for receiving said at least one dosed plastic material from said dosing apparatus (5), second containing means (21) including a second container (22) when the using means (2) comprises a using machine (3) or a plurality of second containers (22) when the using means (2) comprises a plurality of using machines (3), the second container(s) (22) being for receiving said at least one dosed plastic material from said first containing means (13) and supplying it to said using means (2), and conduit means (29) for pneumatically connecting said first containing means (13) to said second containing means (21), said second containing means (21) comprising exit opening means (18; 24; 27) facing said supplying opening means (4), said dosing opening (10) being positioned at a lower height than a height of said exit opening means (18; 24; 27),
***characterized in that***
said supplying apparatus (12) comprises a vacuum pump (30) for generating a vacuum inside said conduit means (29) so as to convey said at least one plastic material from said first container (20) to one of said second containers (22) and further comprises injecting means (35) for injecting air into said first container (20), said injecting means (35) comprising an outlet (101) from which said air exits, said outlet (101) being positioned inside said first container (20) at a choke (100) included therein, to promote the evacuation of said at least one plastic material from said first container (20), said vacuum pump (30) and said injecting means (35) being controlled by a management and control system which maintains them active for a certain time after all the material has reached the second container (22) so as to clean possible material residues off said conduit means (29).

2. System according to claim 1, wherein a difference between the height of said dosing opening (10) and the height of said exit opening means (18; 24; 27) is comprised between 1000 and 1500 mm, in particular is substantially the same as 1200 mm.

3. System according to any preceding claim, wherein said height of said dosing opening (10) is comprised between 600 and 1200 mm, in particular is substantially the same as 900 mm.

4. System according to any preceding claim, wherein said using means (2) comprises a plurality of using machines (3), in particular machines for treating and transforming plastic materials, wherein said dosing apparatus (5) is a centralised dosing apparatus configured for being of service for said plurality of user machines (3).

5. System according to any preceding claim, wherein said first containing means (13) comprises a mixing apparatus (14) for mixing said at least one dosed plastic material received from said dosing apparatus (5), and wherein said first container (20) is positioned downstream of said mixing apparatus (14).

6. System according to any preceding claim, wherein when said using means (2) comprises a using machine (3), in particular a machine for treating and transforming plastic materials, said second containing means (21) comprises a second container (22) for receiving from said first container (20) at least one mixed plastic material, and, optionally, a buffer (25) arranged for containing a stockpile of said at least one mixed plastic material, said buffer (25) being interposed between said second container (22) and said using machine (3) and configured for receiving said at least one mixed plastic material from said second container (22) and dispensing the mixed plastic material to said using machine (3); or, wherein when said using means (2) comprises a plurality of using machines (3), in particular machines for treating and transforming plastic materials, said second containing means (21) comprises a plurality of second containers (22) for each receiving from said first container (20) at least one mixed plastic material, and, optionally, a plurality of buffers (25) for each containing a stockpile of said at least one mixed plastic material, each buffer (25) being interposed between a respective second container (22) and a respective using machine (3) and configured for receiving from the respective second container (22) said at least one mixed plastic material and dispensing the mixed plastic material to the respective using machine (3).

7. System according to any one of claims 1 to 4, wherein when said using means (2) comprises a using machine (3), in particular a machine for treating and transforming plastic materials, said second containing means (21) comprises a second container (22) for receiving from said first container (20) at least one dosed plastic material, and a mixing apparatus (14) interposed between said second container (22) and said using machine (3) and configured for mixing said at least one dosed plastic material received from said second container (22) and dispensing the dosed plastic material to said using machine (3); or, wherein when said using means (2) comprises a plurality of using machines (3), in particular machines for treating and transforming plastic materials, said second containing means (21) comprises a plurality of second containers (22) for each receiving from said first container (20) at least one dosed plastic material, and a plurality of mixing apparatuses (14) each interposed between a respective second container (22) and a respective using machine (3) and configured for mixing said at least one dosed plastic material received from the respective second container (22) and dispensing the dosed plastic material to the respective using machine (3).

8. System according to claim 7, wherein said first container (20) is interposed between said dosing apparatus (5) and said mixing apparatus/es (14).

9. System according to any one of claims 6 to 8, wherein said first container (20) and said second container/s (22) define a buffer volume for said at least one plastic material.

10. System according to any preceding claim, wherein said supplying apparatus (12) comprises valve means (31), positioned along said conduit means (29), to adjust a flow of said at least one plastic material between said first container (20) and one of said second containers (22).

11. System according to claim 10, wherein said using means (2) comprises a plurality of using machines (3), in particular machines for treating and transforming plastic materials, wherein said conduit means comprises a plurality of conduits (29), each arranged for pneumatically connecting said first container (20) to a respective second container (22), wherein said valve means comprises a plurality of valves (31) each positioned along a respective conduit (29) and arranged for pneumatically connecting said first container (20) to a respective second container (22).

12. System according to any one of claims 6 to 11, wherein said supplying apparatus (12) comprises further conduit means (32) for pneumatically connecting said vacuum pump (30) with a respective second container (22).

13. System according to claim 12, wherein said supplying apparatus (12) comprises filter means (33), positioned along said further conduit means (32), for filtering air entering said vacuum pump (30).

14. System according to any preceding claim, wherein said injecting means (35) is optionally connected, by another conduit (37), to an exit of said vacuum pump (30) from which air exits.

## Patentansprüche

1. Zufuhrsystem (1) zum Versorgen einer Verwendungseinrichtung (2) mit mindestens einem inkohärenten Kunststoffmaterial, insbesondere in körniger und/oder Flockenform, wobei die Verwendungseinrichtung (2) mit einer Zufuhröffnungseinrichtung (4) versehen ist, durch die das mindestens eine Kunststoffmaterial in die Verwendungseinrichtung (2) eingeführt wird, wobei das System (1) umfasst:
- eine Dosiervorrichtung (5) zum Dosieren des mindestens einen Kunststoffmaterials, wobei die Dosiervorrichtung (5) mit einer Dosieröffnung (10) versehen ist, durch die mindestens ein dosiertes Kunststoffmaterial austritt, und
- eine Zufuhrvorrichtung (12) zum Versorgen der Verwendungseinrichtung (2) mit dem mindestens einen dosierten Kunststoffmaterial durch die Zufuhröffnungseinrichtung (4);
wobei die Zufuhrvorrichtung (12) eine pneumatische Zufuhrvorrichtung ist, mit einer ersten Aufnahmeeinrichtung (13) mit einem ersten Behälter (20) zum Empfangen des mindestens einen dosierten Kunststoffmaterials von der Dosiervorrichtung (5), einer zweiten Aufnahmeeinrichtung (21) mit einem zweiten Behälter (22), wenn die Verwendungseinrichtung (2) eine Verwendungsmaschine (3) umfasst, oder einer Vielzahl von zweiten Behältern (22), wenn die Verwendungseinrichtung (2) eine Vielzahl von Verwendungsmaschinen (3) umfasst, wobei der (die) zweite(n) Behälter (22) zum Empfangen des mindestens einen dosierten Kunststoffmaterials von der ersten Aufnahmeeinrichtung (13) und Zuführen desselben zur Verwendungseinrichtung (2) dient (dienen), und einer Leitungseinrichtung (29) zum pneumatischen Verbinden der ersten Aufnahmeeinrichtung (13) mit der zweiten Aufnahmeeinrichtung (21), wobei die zweite Aufnahmeeinrichtung (21) eine Austrittsöffnungseinrichtung (18; 24; 27) umfasst, die der Zufuhröffnungseinrichtung (4) zugewandt ist, wobei die Dosieröffnung (10) in einer niedrigeren Höhe als einer Höhe der Austrittsöffnungseinrichtung (18; 24; 27) angeordnet ist,
**dadurch gekennzeichnet, dass**
die Zufuhrvorrichtung (12) eine Vakuumpumpe (30) zum Erzeugen eines Unterdrucks innerhalb der Leitungseinrichtung (29) umfasst, um das mindestens eine Kunststoffmaterial vom ersten Behälter (20) zu einem der zweiten Behälter (22) zu befördern, und ferner eine Einleitungseinrichtung (35) zum Einleiten von Luft in den ersten Behälter (20) umfasst, wobei die Einleitungseinrichtung (35) einen Auslass (101) umfasst, aus dem die Luft austritt, wobei der Auslass (101) innerhalb des ersten Behälters (20) an einer darin enthaltenen Drossel (100) angeordnet ist, um die Abführung des mindestens einen Kunststoffmaterials aus dem ersten Behälter (20) zu fördern,
wobei die Vakuumpumpe (30) und die Einleitungseinrichtung (35) durch ein Management- und Steuersystem gesteuert werden, das sie für eine bestimmte Zeit aktiv hält, nachdem das ganze Material den zweiten Behälter (22) erreicht hat, um mögliche Materialrückstände aus der Leitungseinrichtung (29) zu reinigen.

2. System nach Anspruch 1, wobei eine Differenz zwischen der Höhe der Dosieröffnung (10) und der Höhe der Austrittsöffnungseinrichtung (18; 24; 27) zwischen 1000 und 1500 mm liegt, insbesondere im Wesentlichen gleich 1200 mm ist.

3. System nach einem vorangehenden Anspruch, wobei die Höhe der Dosieröffnung (10) zwischen 600 und 1200 mm liegt, insbesondere im Wesentlichen gleich 900 mm ist.

4. System nach einem vorangehenden Anspruch, wobei die Verwendungseinrichtung (2) eine Vielzahl von Verwendungsmaschinen (3), insbesondere Maschinen zur Behandlung und Umwandlung von Kunststoffmaterialien, umfasst, wobei die Dosiervorrichtung (5) eine zentralisierte Dosiervorrichtung ist, die so ausgelegt ist, dass sie für die Vielzahl von Benutzermaschinen (3) dienlich ist.

5. System nach einem vorangehenden Anspruch, wobei die erste Aufnahmeeinrichtung (13) eine Mischvorrichtung (14) zum Mischen des mindestens einen dosierten Kunststoffmaterials, das von der Dosiervorrichtung (5) empfangen wird, umfasst, und wobei der erste Behälter (20) stromabwärts von der Mischvorrichtung (14) angeordnet ist.

6. System nach einem vorangehenden Anspruch, wobei, wenn die Verwendungseinrichtung (2) eine Verwendungsmaschine (3), insbesondere eine Maschine zum Behandeln und Umwandeln von Kunststoffmaterialien, umfasst, die zweite Aufnahmeeinrichtung (21) einen zweiten Behälter (22) zum Empfangen mindestens eines gemischten Kunststoffmaterials vom ersten Behälter (20) und wahlweise einen Puffer (25) umfasst, der zum Aufnehmen eines Vorrats des mindestens einen gemischten Kunststoffmaterials angeordnet ist, wobei der Puffer (25) zwischen den zweiten Behälter (22) und die Verwendungsmaschine (3) eingefügt ist und zum Empfangen des mindestens einen gemischten Kunststoffmaterials vom zweiten Behälter (22) und Ausgeben des gemischten Kunststoffmaterials an die Verwendungsmaschine (3) ausgelegt ist; oder wobei
wenn die Verwendungseinrichtung (2) eine Vielzahl von Verwendungsmaschinen (3), insbesondere Maschinen zum Behandeln und Umwandeln von Kunststoffmaterialien, umfasst, die zweite Aufnahmeeinrichtung (21) eine Vielzahl von zweiten Behältern (22) zum jeweiligen Empfangen mindestens eines gemischten Kunststoffmaterials vom ersten Behälter (20) und wahlweise eine Vielzahl von Puffern (25) zum jeweiligen Aufnehmen eines Vorrats des mindestens einen gemischten Kunststoffmaterials umfasst, wobei jeder Puffer (25) zwischen einen jeweiligen zweiten Behälter (22) und eine jeweilige Verwendungsmaschine (3) eingefügt ist und zum Empfangen des mindestens einen gemischten Kunststoffmaterials vom jeweiligen zweiten Behälter (22) und Ausgeben des gemischten Kunststoffmaterials an die jeweilige Verwendungsmaschine (3) ausgelegt ist.

7. System nach einem der Ansprüche 1 bis 4, wobei, wenn die Verwendungseinrichtung (2) eine Verwendungsmaschine (3), insbesondere eine Maschine zum Behandeln und Umwandeln von Kunststoffmaterialien, umfasst, die zweite Aufnahmeeinrichtung (21) einen zweiten Behälter (22) zum Empfangen mindestens eines dosierten Kunststoffmaterials vom ersten Behälter (20) und eine Mischvorrichtung (14) umfasst, die zwischen den zweiten Behälter (22) und die Verwendungsmaschine (3) eingefügt ist und zum Mischen des mindestens einen dosierten Kunststoffmaterials, das vom zweiten Behälter (22) empfangen wird, und Ausgeben des dosierten Kunststoffmaterials an die Verwendungsmaschine (3) ausgelegt ist; oder wobei,
wenn die Verwendungseinrichtung (2) eine Vielzahl von Verwendungsmaschinen (3), insbesondere Maschinen zum Behandeln und Umwandeln von Kunststoffmaterialien, umfasst, die zweite Aufnahmeeinrichtung (21) eine Vielzahl von zweiten Behältern (22) zum jeweiligen Empfangen mindestens eines dosierten Kunststoffmaterials vom ersten Behälter (20) und eine Vielzahl von Mischvorrichtungen (14) umfasst, die jeweils zwischen einen jeweiligen zweiten Behälter (22) und eine jeweilige Verwendungsmaschine (3) eingefügt sind und zum Mischen des mindestens einen dosierten Kunststoffmaterials, das vom jeweiligen zweiten Behälter (22) empfangen wird, und Ausgeben des dosierten Kunststoffmaterials an die jeweilige Verwendungsmaschine (3) ausgelegt sind.

8. System nach Anspruch 7, wobei der erste Behälter (20) zwischen die Dosiervorrichtung (5) und die Mischvorrichtung/en (14) eingefügt ist.

9. System nach einem der Ansprüche 6 bis 8, wobei der erste Behälter (20) und der/die zweite/n Behälter (22) ein Puffervolumen für das mindestens eine Kunststoffmaterial definieren.

10. System nach einem vorangehenden Anspruch, wobei die Zufuhrvorrichtung (12) eine Ventileinrichtung (31) umfasst, die entlang der Leitungseinrichtung (29) angeordnet ist, um eine Strömung des mindestens einen Kunststoffmaterials zwischen dem ersten Behälter (20) und einem der zweiten Behälter (22) einzustellen.

11. System nach Anspruch 10, wobei die Verwendungseinrichtung (2) eine Vielzahl von Verwendungsmaschinen (3), insbesondere Maschinen zum Behandeln und Umwandeln von Kunststoffmaterialien, umfasst, wobei die Leitungseinrichtung eine Vielzahl von Leitungen (29) umfasst, die jeweils zum pneumatischen Verbinden des ersten Behälters (20) mit einem jeweiligen zweiten Behälter (22) angeordnet sind, wobei die Ventileinrichtung eine Vielzahl von Ventilen (31) umfasst, die jeweils entlang einer jeweiligen Leitung (29) angeordnet sind und zum pneumatischen Verbinden des ersten Behälters (20) mit einem jeweiligen zweiten Behälter (22) angeordnet sind.

12. System nach einem der Ansprüche 6 bis 11, wobei die Zufuhrvorrichtung (12) eine weitere Leitungseinrichtung (32) zum pneumatischen Verbinden der Vakuumpumpe (30) mit einem jeweiligen zweiten Behälter (22) umfasst.

13. System nach Anspruch 12, wobei die Zufuhrvorrichtung (12) eine Filtereinrichtung (33), die entlang der weiteren Leitungseinrichtung (32) angeordnet ist, zum Filtern von Luft, die in die Vakuumpumpe (30) eintritt, umfasst.

14. System nach einem vorangehenden Anspruch, wobei die Einleitungseinrichtung (35) wahlweise durch eine andere Leitung (37) mit einem Auslass der Vakuumpumpe (30), von dem Luft austritt, verbunden ist.

## Revendications

1. Système d'alimentation (1) pour alimenter des moyens d'utilisation (2) avec au moins une matière plastique incohérente, en particulier sous forme granulaire et/ou de paillettes, lesdits moyens d'utilisation (2) étant pourvus de moyens d'ouverture d'alimentation (4) à travers lesquels ladite au moins une matière plastique est introduite dans lesdits moyens d'utilisation (2), ledit système (1) comprend :
- un appareil de dosage (5) pour doser ladite au moins une matière plastique, ledit appareil de dosage (5) étant pourvu d'une ouverture de dosage (10) à travers laquelle au moins une matière plastique dosée sort, et
- un appareil d'alimentation (12) pour alimenter avec ladite au moins une matière plastique dosée lesdits moyens d'utilisation (2) à travers lesdits moyens d'ouverture d'alimentation (4) ;
dans lequel ledit appareil d'alimentation (12) est un appareil d'alimentation pneumatique comprenant des premiers moyens de confinement (13) incluant un premier récipient (20) pour recevoir ladite au moins une matière plastique dosée provenant dudit appareil de dosage (5), des seconds moyens de confinement (21) incluant un second récipient (22) lorsque les moyens d'utilisation (2) comprennent une machine d'utilisation (3) ou une pluralité de seconds récipients (22) lorsque les moyens d'utilisation (2) comprennent une pluralité de machines d'utilisation (3), le(s) second(s) récipient(s) (22) étant destinés à recevoir ladite au moins une matière plastique dosée provenant desdits premiers moyens de confinement (13) et la fournir auxdits moyens d'utilisation (2), et des moyens de conduit (29) pour raccorder pneumatiquement lesdits premiers moyens de confinement (13) auxdits seconds moyens de confinement (21), lesdits seconds moyens de confinement (21) comprenant des moyens d'ouverture de sortie (18 ; 24 ; 27) dirigés vers lesdits moyens d'ouverture d'alimentation (4), ladite ouverture de dosage (10) étant positionnée à une hauteur plus basse qu'une hauteur desdits moyens d'ouverture de sortie (18 ; 24 ; 27),
**caractérisé en ce que**
ledit appareil d'alimentation (12) comprend une pompe à vide (30) pour générer un vide à l'intérieur desdits moyens de conduit (29) de manière à transférer ladite au moins une matière plastique dudit premier récipient (20) à l'un desdits seconds récipients (22) et comprend en outre des moyens d'injection (35) pour injecter de l'air dans ledit premier récipient (20), lesdits moyens d'injection (35) comprenant une sortie (101) de laquelle ledit air sort, ladite sortie (101) étant positionnée à l'intérieur dudit premier récipient (20) sur un étranglement (100) inclus dans celle-ci, pour favoriser l'évacuation de ladite au moins une matière plastique à partir dudit premier récipient (20), ladite pompe à vide (30) et lesdits moyens d'injection (35) étant commandés par un système de gestion et de commande qui les maintient actifs pendant un certain temps après que toute la matière a atteint le second récipient (22) de manière à ôter par nettoyage les résidus de matière possibles desdits moyens de conduit (29).

2. Système selon la revendication 1, dans lequel une différence entre la hauteur de ladite ouverture de dosage (10) et la hauteur desdits moyens d'ouverture de sortie (18 ; 24 ; 27) est comprise entre 1 000 et 1 500 mm, en particulier est sensiblement égale à 1 200 mm.

3. Système selon l'une quelconque des revendications précédentes, dans lequel ladite hauteur de ladite ouverture de dosage (10) est comprise entre 600 et 1 200 mm, en particulier est sensiblement égale à 900 mm.

4. Système selon l'une quelconque des revendications précédentes, dans lequel lesdits moyens d'utilisation (2) comprennent une pluralité de machines d'utilisation (3), en particulier des machines pour traiter et transformer des matières plastiques, dans lequel ledit appareil de dosage (5) est un appareil de dosage centralisé configuré pour être en service pour ladite pluralité de machines d'utilisation (3).

5. Système selon l'une quelconque des revendications précédentes, dans lequel lesdits premiers moyens de confinement (13) comprennent un appareil de mélange (14) pour mélanger ladite au moins une matière plastique dosée reçue dudit appareil de dosage (5), et dans lequel ledit premier récipient (20) est positionné en aval dudit appareil de mélange (14).

6. Système selon l'une quelconque des revendications précédentes, dans lequel lorsque lesdits moyens d'utilisation (2) comprennent une machine d'utilisation (3), en particulier d'une machine pour traiter et transformer des matières plastiques, lesdits seconds moyens de confinement (21) comprennent un second récipient (22) pour recevoir à partir dudit premier récipient (20) au moins une matière plastique mélangée, et, facultativement, un tampon (25) conçu pour contenir une pile de stockage de ladite au moins une matière plastique mélangée, ledit tampon (25) étant interposé entre ledit second récipient (22) et ladite machine d'utilisation (3) et configuré pour recevoir ladite au moins une matière plastique mélangée provenant dudit second récipient (22) et distribuer la matière plastique mélangée à ladite machine d'utilisation (3) ; ou, dans lequel lorsque lesdits moyens d'utilisation (2) comprennent une pluralité de machines d'utilisation (3), en particulier des machines pour traiter et transformer des matières plastiques, lesdits seconds moyens de confinement (21) comprennent une pluralité de seconds récipients (22) pour recevoir chacun à partir dudit premier récipient (20) au moins une matière plastique mélangée, et, facultativement, une pluralité de tampons (25) pour contenir chacun une pile de stockage de ladite au moins une matière plastique mélangée, chaque tampon (25) étant interposé entre un second récipient (22) respectif et une machine d'utilisation (3) respective et configuré pour recevoir du second récipient (22) respectif ladite au moins une matière plastique mélangée et distribuer la matière plastique mélangée à la machine d'utilisation (3) respective.

7. Système selon l'une quelconque des revendications 1 à 4, dans lequel lorsque lesdits moyens d'utilisation (2) comprennent une machine d'utilisation (3), en particulier une machine pour traiter et transformer des matières plastiques, lesdits seconds moyens de confinement (21) comprennent un second récipient (22) pour recevoir dudit premier récipient (20) au moins une matière plastique dosée, et un appareil de mélange (14) interposé entre ledit second récipient (22) et ladite machine d'utilisation (3) et configuré pour mélanger ladite au moins une matière plastique dosée reçue dudit second récipient (22) et distribuer la matière plastique dosée à ladite machine d'utilisation (3) ; ou, dans lequel lorsque lesdits moyens d'utilisation (2) comprennent une pluralité de machines d'utilisation (3), en particulier des machines pour traiter et transformer des matières plastiques, lesdits seconds moyens de confinement (21) comprennent une pluralité de seconds récipients (22) pour recevoir chacun à partir dudit premier récipient (20) au moins une matière plastique dosée, et une pluralité d'appareils de mélange (14) chacun interposé entre un second récipient (22) respectif et une machine d'utilisation (3) respective et configuré pour mélanger ladite au moins une matière plastique dosée reçue du second récipient (22) respectif et distribuer la matière plastique dosée à la machine d'utilisation (3) respective.

8. Système selon la revendication 7, dans lequel ledit premier récipient (20) est interposé entre ledit appareil de dosage (5) et le(s)dit(s) appareil(s) de mélange (14).

9. Système selon l'une quelconque des revendications 6 à 8, dans lequel ledit premier récipient (20) et le(s)dit(s) second(s) récipient (s) (22) définissent un volume tampon pour ladite au moins une matière plastique.

10. Système selon l'une quelconque des revendications précédentes, dans lequel ledit appareil d'alimentation (12) comprend des moyens de vanne (31), positionnés le long desdits moyens de conduit (29), pour régler un débit de ladite au moins une matière plastique entre ledit premier récipient (20) et l'un desdits seconds récipients (22).

11. Système selon la revendication 10, dans lequel lesdits moyens d'utilisation (2) comprennent une pluralité de machines d'utilisation (3), en particulier des machines pour traiter et transformer des matières plastiques, dans lequel lesdits moyens de conduit comprennent une pluralité de conduits (29), chacun agencé pour relier pneumatiquement ledit premier récipient (20) à un second récipient (22) respectif, dans lequel lesdits moyens de vanne comprennent une pluralité de soupapes (31) chacune positionnée le long d'un conduit (29) respectifs et conçue pour relier pneumatiquement ledit premier récipient (20) à un second récipient (22) respectif.

12. Système selon l'une quelconque des revendications 6 à 11, dans lequel ledit appareil d'alimentation (12) comprend des moyens de conduit supplémentaires (32) pour relier pneumatiquement ladite pompe à vide (30) à un second récipient (22) respectif.

13. Système selon la revendication 12, dans lequel ledit appareil d'alimentation (12) comprend des moyens de filtrage (33), positionnés le long desdits moyens de conduit supplémentaires (32), pour filtrer de l'air pénétrant dans ladite pompe à vide (30).

14. Système selon l'une quelconque des revendications précédentes, dans lequel lesdits moyens d'injection (35) sont raccordés facultativement, par un autre conduit (37), à une sortie de ladite pompe à vide (30) de laquelle de l'air sort.
